# EUROPÄISCHE PATENTSCHRIFT

(11) **EP 3 861 849 B1**
(45) Veröffentlichungstag und Bekanntmachung des Hinweises auf die Patenterteilung: **16.03.2022**
(21) Anmeldenummer: 21154985.2
(22) Anmeldetag: 03.02.2021
(51) Int. Cl.: A01D 43/08, A01F 29/06, A01F 29/22, B24B 3/36, G01B 11/02, G01B 11/24

(54) **LANDWIRTSCHAFTLICHE ARBEITSMASCHINE MIT EINER MESSANORDNUNG, MESSANORDNUNG FÜR DIE LANDWIRTSCHAFTLICHE ARBEITSMASCHINE UND VERFAHREN ZUM MESSEN EINER KONTUR EINES SICH BEWEGENDEN BAUTEILS DER LANDWIRTSCHAFTLICHEN ARBEITSMASCHINE**
AGRICULTURAL WORKING MACHINE WITH A MEASURING ARRANGEMENT, MEASURING ARRANGEMENT FOR THE AGRICULTURAL WORKING MACHINE AND METHOD FOR MEASURING THE CONTOUR OF A MOVING COMPONENT OF THE AGRICULTURAL WORKING MACHINE
MACHINE DE TRAVAIL AGRICOLE DOTÉ D'UN AGENCEMENT DE MESURE, AGENCEMENT DE MESURE POUR LA MACHINE DE TRAVAIL AGRICOLE ET PROCÉDÉ DE MESURE D'UN CONTOUR D'UN COMPOSANT MOBILE DE LA MACHINE DE TRAVAIL AGRICOLE

(30) Priorität: 04.02.2020 DE 102020000725
(43) Veröffentlichungstag der Anmeldung: 11.08.2021
(73) Patentinhaber: Maschinenfabrik Bernard Krone GmbH & Co. KG, 48480 Spelle (DE)
(72) Erfinder: Kronsbein, Christoph- Frederik, 49328 Melle (DE); Berghaus, André, 48727 Billerbeck (DE)

(56) Entgegenhaltungen:
- DE-A1-102011 005 317
- DE-A1-102014 218 408
- DE-A1-102017 129 778
- DE-A1-102018 116 237

## Beschreibung

Die vorliegende Erfindung betrifft eine landwirtschaftliche Arbeitsmaschine, insbesondere einen Feldhäcksler, mit einem Arbeitsaggregat, insbesondere einem Häckselaggregat, das zur Verarbeitung von Erntegut vorgesehen ist, mit einer Messanordnung und mit einem sich in einem Betrieb der Arbeitsmaschine in eine Bewegungsrichtung bewegenden Bauteil. Die vorliegende Erfindung betrifft weiterhin eine Messanordnung für eine solche landwirtschaftliche Arbeitsmaschine sowie ein Verfahren zum Erfassen einer Kontur eines sich in eine Bewegungsrichtung bewegenden Bauteils.

Die zum Schneiden von landwirtschaftlichem Erntegut in landwirtschaftlichen Arbeitsmaschinen genutzten Messer unterliegen einem erheblichen Verschleiß, wobei eine Schneidkante der Schneide der Messer abgetragen wird. Um den Erntebetrieb möglichst wenig unterbrechen zu müssen, ist es beispielsweise bei Feldhäckslern bekannt, den Schärfegrad der Messer zu erfassen. Die Schneidkante kann gegebenenfalls bereits während eines Feldeinsatzes nachgeschliffen werden.

Stumpfe Messer können zu ungewollt großen, insbesondere langfaserigen, Erntegutstücken und/oder einer unsauberen Schnittkante führen oder das Erntegut sogar zerfasern. Zudem wird zum Schneiden von Erntegut mit einem stumpfen Messer mehr Energie benötigt als beim Schneiden mit einem scharfen Messer, so dass der Kraftstoffverbrauch der landwirtschaftlichen Arbeitsmaschine bei Nutzung von stumpfen Messern erhöht ist. Daher ist es vorteilhaft, wenn die Messer rechtzeitig nachgeschliffen und/oder ausgetauscht werden.

Feldhäcksler weisen eine Häckseltrommel mit einer Vielzahl von Messern auf. Um ihren Schärfegrad zu erfassen, ist es beispielsweise aus den Druckschriften EP 1 522 214 B1 und EP 2 805 603 A1 bekannt, die Schneidkante der Häckselmesser optisch mit einer Kamera zu erfassen und die erfassten Bilddaten auszuwerten. Jedoch ist im Bereich der Häckseltrommel mit Staub und Schmutzablagerungen zu rechnen, die die optische Erfassung erschweren und beeinflussen.

Die Druckschrift DE 10 2017 201 423 A1 erfasst mittels eines induktiven Sensors einen Abstand zwischen einer nicht radial zur Häckseltrommel verstellten Gegenschneide und der Häckseltrommel und ermittelt anhand eines vom Sensor versendeten Sendesignals ein Signal, dass einen Hinweis auf den Verschleißgrad der Häckselmesser gibt.

Die Druckschrift DE 10 2018 116 237 A1 offenbart ein Sensorelement mit einer zumindest einen ein Magnetfeld erzeugenden Magneten aufweisende Magnetanordnung, wobei eine spulenlose Messzelle in der Lage ist, ein statisches Magnetfeld zu messen. Die Druckschrift offenbart zudem ein Verfahren zur Ermittlung von Eigenschaften einer Vorrichtung, die eine Vielzahl von jeweils einen Rücken und eine dem Rücken gegenüberliegende Schneide aufweisende Schneidemesser aufweist, wobei die Eigenschaften insbesondere die Schärfe der Schneiden, die in der Umfangsrichtung gemessene Länge der in der Zylindermantelfläche liegenden Stirnseite der Schneidemesser, ein radialer Abstand der Schneidmesser zu einer Gegenschneide oder ein radialer Abstand der Schneidemesser zu einer Schärfeinrichtung sind.

Die Änderung der Kontur eines stumpfen Messers im Vergleich zu einem scharfen Messer liegt in einer Größenordnung von weniger als 1mm. Der die Detektion des Schärfegrades und/oder Verschleißes betreffende Bereich der Häckselmesser ist im Verhältnis zum Gesamtumfang der Häckseltrommel (Größenordnung 1,5 - 2,5m) daher äußerst klein. Im laufenden Betrieb ist die Drehzahl der Häckseltrommel (Größenordnung 800 - 1500 Umdrehungen pro Minute) zudem sehr groß. Deshalb müssen Messungen des Schärfegrades im laufenden Betrieb der Häckseltrommel mit sehr hoher Abtastfrequenz (zumindest größer als 100kHz, vorzugsweise größer als 500kHz) erfolgen. Eine kosteneffiziente Lösung mit solchen Sensoren ist bisher nicht verfügbar.

Aufgabe der vorliegenden Erfindung ist es, eine Messanordnung für eine landwirtschaftliche Arbeitsmaschine bereitzustellen, mit der die Erfassung des Schärfegrades und/oder Verschleißes von Bearbeitungswerkzeugen, insbesondere von Messern, der landwirtschaftlichen Arbeitsmaschine, insbesondere von Häckselmessern eines Feldhäckslers, im laufenden Betrieb, mit hoher Auflösung und daher sehr genau, und dennoch kostengünstig möglich ist, sowie eine landwirtschaftliche Arbeitsmaschine, insbesondere einen Feldhäcksler, mit der Messanordnung.

Die Aufgabe wird gelöst mit einer landwirtschaftlichen Arbeitsmaschine mit den Merkmalen des unabhängigen Patentanspruchs 1, einer Messanordnung für eine solche landwirtschaftliche Arbeitsmaschine mit den Merkmalen des unabhängige Patentanspruchs 17 und einem Verfahren zum Erfassen einer Kontur eines sich in eine Bewegungsrichtung bewegenden Bauteils einer solchen landwirtschaftlichen Arbeitsmaschine mit den Merkmalen des unabhängigen Patentanspruchs 18. Vorteilhafte Ausführungsformen sind den abhängigen Ansprüchen entnehmbar.

Dafür wird eine landwirtschaftliche Arbeitsmaschine geschaffen. Die landwirtschaftliche Arbeitsmaschine weist ein Arbeitsaggregat auf, das zur Verarbeitung von Erntegut vorgesehen ist. Zudem weist sie eine Messanordnung sowie ein sich in einem Betrieb der Arbeitsmaschine in eine Bewegungsrichtung bewegendes Bauteil auf. Die Messanordnung ist zum Erfassen einer Kontur des sich in die Bewegungsrichtung bewegenden Bauteils eingerichtet.

Die landwirtschaftliche Arbeitsmaschine kann sowohl eine gezogene als auch eine selbstfahrende Arbeitsmaschine sein. Bevorzugt ist sie ein Feldhäcksler. Die Erfindung ist aber nicht auf Feldhäcksler beschränkt, sondern umfasst auch weitere landwirtschaftliche Arbeitsmaschinen wie beispielsweise Mähmaschinen, Heuwerbungsmaschinen, Ladewagen oder Pressen.

Das sich bewegende Bauteil bewegt sich im Betrieb der landwirtschaftlichen Arbeitsmaschine, das heißt in einem Erntebetrieb und/oder in einem Straßenbetrieb der Arbeitsmaschine. In einer bevorzugten Ausführungsform ist es ein Bestandteil des Arbeitsaggregats. Die Messanordnung kann aber auch zur Erfassung einer Kontur anderer sich bewegender Bauteile der landwirtschaftlichen Arbeitsmaschine genutzt werden, die kein Bestandteil eines das Erntegut verarbeitenden Arbeitsaggregates der landwirtschaftlichen Arbeitsmaschine sind. Vorzugsweise ist die Messanordnung für die Überwachung von verschleißanfälligen Bauteilen der Arbeitsmaschine vorgesehen.

In der Ausführungsform der landwirtschaftlichen Arbeitsmaschine als Feldhäcksler ist das Arbeitsaggregat in einer bevorzugten Ausführungsform ein Häckselaggregat, welches zum Zerkleinern des Ernteguts vorgesehen ist. Das sich bewegende Bauteil ist in dieser Ausführungsform beispielsweise ein an einer Häckseltrommel des Häckselaggregats angeordnetes Messer. Vorzugsweise ist die Messanordnung zur Erfassung einer Schneidkante des Messers vorgesehen, um eine Schärfe und/oder Abnutzung des Messers zu prüfen.

Die Messanordnung weist mindestens einen Sender zum Aussenden eines Sendesignals auf. Der Sender ist so positioniert, dass das Sendesignal auf das sich bewegende Bauteil auftrifft. Das Sendesignal wird teilweise von dem sich bewegenden Bauteil reflektiert. Im Folgenden wird ein von dem sich bewegenden Bauteil in einem Messpunkt reflektierter Teil des Sendesignals als Messsignal bezeichnet.

Die Messanordnung weist weiterhin ein Sensorarray mit mindestens zwei in Bewegungsrichtung des Bauteils hintereinander angeordneten Sensoren auf. In einer bevorzugten Ausführungsform umfasst die Messanordnung mehr als zwei Sensoren. Dabei ist eine Anzahl der benötigten Sensoren von einer maximalen Abtastfrequenz der Sensoren im Vergleich zu einer geforderten Abtastfrequenz der Anwendung, einer insbesondere maximalen Geschwindigkeit des Bauteils, sowie von einer Größe des Bauteils, insbesondere einer Länge des zu erfassenden Bereichs des Bauteils in Bewegungsrichtung, abhängig.

Die Sensoren sind jeweils dazu eingerichtet, eine Messung durchzuführen, indem sie ein an einem Messpunkt des Bauteils reflektiertes Messsignal empfangen. Durch die in Bewegungsrichtung aufeinander folgende Anordnung der Sensoren sind die Messpunkte am Bauteil, von denen das von ihnen gemessene Messsignal reflektiert wird, gegen die Bewegungsrichtung aufeinander folgend angeordnet.

Dabei sind die Sensoren des Sensorarrays bevorzugt in Bewegungsrichtung fluchtend hintereinander angeordnet. Dadurch sind die Messpunkte entlang einer sich in Bewegungsrichtung erstreckenden Linie angeordnet. Durch Nebeneinanderreihen mehrerer Sensorarrays kann die Kontur des sich bewegenden Bauteils daher in einer Erstreckungsrichtung des Bauteils, die sich quer zur Bewegungsrichtung des Bauteils erstreckt, reihenweise erfasst werden.

Die Messanordnung umfasst weiterhin eine Steuerungseinheit. Die Steuerungseinheit ist dazu eingerichtet, die Sensoren des Sensorarrays in Bewegungsrichtung des Bauteils aufeinanderfolgend anzusteuern. Die Sensoren des Sensorarrays führen ihre Messung daher mit einem zeitlichen Versatz zueinander aus.

Zudem weist die Messanordnung eine Auswertungseinheit zum Auswerten der Messsignale des Sensorarrays auf. Die Auswertungseinheit ist dazu eingerichtet, aus den Messsignalen jeweils einen Abstandswert des Sensors von dem Bauteil zu berechnen. Für die Berechnung der Abstandswerte werden bevorzugt herkömmliche Methoden wie beispielsweise eine Erfassung einer Laufzeitdifferenz und/oder einer Phasenverschiebung zwischen dem Sendesignal und dem Messsignal genutzt. In einer bevorzugten Ausführungsform handelt es sich bei den Sensoren des Sensorarrays daher um Laufzeitsensoren.

Um die Kontur des sich bewegenden Bauteils mit ausreichender Genauigkeit erfassen zu können, ist eine genaue Positionierung des Senders und der Sensoren und/oder eine genaue Kenntnis ihrer Positionen relativ zueinander erforderlich. Dadurch können Laufzeitdifferenzen und/oder Phasenverschiebungen genau bestimmt werden.

Dabei können anstelle eines einzigen Senders mit ausreichend großer Sendeleistung auch mehrere kleinere Sender mit einer geringeren Sendeleistung genutzt werden. In einer bevorzugten Ausführungsform ist jedem Sensor des Sensorarrays jeweils ein Sender zugeordnet. Besonders bevorzugt umfasst jeder Sensor jeweils einen ihm zugeordneten Sender. Diese Ausführungsform hat den Vorteil, dass die Steuerungseinheit die Sensoren und ihre Sender jeweils taktsynchron, d. h. mit derselben Abtastfrequenz und ohne Phasenverschiebung, ansteuern kann.

Die der vorliegenden Erfindung zugrundeliegende Idee besteht darin, eine theoretische Messung mit einem theoretischen Messsignal einer theoretischen, geforderten Abtastfrequenz zu errechnen, indem die Messungen mehrerer Sensoren mit geringerer Abtastfrequenz überlagert werden. Da es nicht möglich ist, mit mehreren Sensoren in exakt demselben Messpunkt zu messen, sind die Sensoren räumlich voneinander beabstandet angeordnet. Dabei ist es bevorzugt, dass sich das Sensorarray im Wesentlichen parallel zur Bewegungsrichtung des Bauteils erstreckt.

Da die Sensoren räumlich voneinander beabstandet sind, ist die Steuerungseinheit dazu eingerichtet, sie beim Passieren des Bauteils aufeinanderfolgend anzusteuern. Um eine ausreichende Auflösung, das heißt geforderte Wunsch- Abtastfrequenz des theoretischen Messsignals, zu erzielen, ist es bevorzugt, dass die Steuerungseinheit dazu eingerichtet ist, den Zeitversatz, mit dem die Sensoren abgetastet werden, in Abhängigkeit vom Sensorabstand der benachbarten Sensoren voneinander und/oder von einer aktuellen Geschwindigkeit des Bauteils zu berechnen. Weiterhin ist die Steuerungseinheit dazu eingerichtet, benachbarte Sensoren jeweils mit dem für sie berechneten Zeitversatz aufeinanderfolgend anzusteuern.

In einer bevorzugten Ausführungsform ist die Auswertungseinheit dazu eingerichtet, ein Kontursignal der Kontur des sich bewegenden Bauteils mit einer gegenüber der Abtastfrequenz der Sensoren höheren Frequenz durch Aneinanderreihen der berechneten Abstandswerte der Sensoren, insbesondere in der Reihenfolge ihrer Erfassung, zu berechnen. Das Kontursignal entspricht dem theoretischen Messsignal der theoretischen Messung.

Dafür ist die Auswertungseinheit bevorzugt weiterhin dazu eingerichtet, zueinander benachbarte Abstandswerte mit einer Distanz voneinander anzuordnen, die durch den Sensorabstand der benachbarten Sensoren voneinander, eine Frequenz des Sendesignals sowie eine aktuelle Geschwindigkeit des Bauteils bestimmt ist. Durch Aneinanderreihen der Abstandswerte in der jeweils zwischen ihnen bestehenden Distanz ist ein Abbild der Kontur des Messers erhältlich.

Die Auswertungseinheit kann zudem dazu eingerichtet sein, die Abstandswerte miteinander zu verbinden, um die Kontur in analoger, zusammenhängender Form näherungsweise darzustellen. Dies ist in einem kartesischen Koordinatensystem möglich, wobei die Abstandswerte auf der Ordinate und die zwischen den Abstandswerten jeweils ermittelte Distanz auf der Abszisse aufgetragen werden. Der sich dabei abzeichnende Verlauf spiegelt die Kontur des Bauteils wieder.

Es hat sich gezeigt, dass ein während des Betriebs der landwirtschaftlichen Arbeitsmaschine auf diese Weise bestimmtes Kontursignal den Verlauf der Kontur des Bauteils mit einer ausreichenden Auflösung wiedergibt, obwohl die Abtastfrequenz der einzelnen Sensoren für sich genommen dafür eigentlich zu gering ist.

Die so durchgeführte Messung ist kontaktlos, sehr genau, insbesondere im Bereich von Mikrometern, und in Abhängigkeit von der verwendeten Messmethode der Sensorik auch in staubiger Umgebung möglich.

In einer weiteren bevorzugten Ausführungsform ist die Auswertungseinheit dazu eingerichtet, einen Verschleißzustand des sich bewegenden Bauteils durch Vergleich seiner erfassten Kontur mit Referenzwerten zu bestimmen. Die Referenzwerte können dabei maschinenspezifische Werte der landwirtschaftlichen Arbeitsmaschine sein. Alternativ oder zusätzlich können auch Messwerte genutzt werden, die beispielsweise nach einem Austausch des sich bewegenden Bauteils oder bei einer ersten Inbetriebnahme erfasst wurden.

Um einen gleichbleibenden Messabstand der am Bauteil angeordneten Messpunkte zueinander und/oder ein Kontursignal mit konstanter Abtastfrequenz zu erzielen, ist es bevorzugt, dass der Sensorabstand zwischen den Sensoren des Sensorarrays voneinander gleich ist. In dieser Ausführungsform ist bevorzugt der zeitliche Versatz ihrer Sendesignale zueinander gleich. Bei konstanter Geschwindigkeit des sich bewegenden Bauteils sind die Messpunkte dann gleichweit voneinander beabstandet. Ein differierender Sensorabstand der Sensoren des Sensorarrays zueinander wird bevorzugt durch eine der jeweiligen Differenz entsprechende Anpassung des zeitlichen Versatzes der Sendesignale ausgeglichen. Dabei kann ein differierender Sensorabstand benachbarter Sensoren zueinander beispielsweise in einem Kalibrierungsprozess bestimmt werden.

Eine Anzahl der für eine gewünschte Auflösung benötigten Sensoren ergibt sich dabei aus einem Quotienten aus der geforderten Abtastfrequenz des Kontursignals zur Abtastfrequenz der Sensoren.

Bei einer Änderung der Geschwindigkeit des sich bewegenden Bauteils wird der Messabstand der Messpunkte entsprechend der Abweichung vergrößert oder verkleinert. Um eine Abweichung von einer konstanten Geschwindigkeit des sich bewegenden Bauteils zu erfassen, kann die Messanordnung weiterhin einen Geschwindigkeitssensor umfassen. In dieser Ausführungsform ist es bevorzugt, dass die Auswertungseinheit die Abweichung bei der Bestimmung der Kontur des Bauteils berücksichtigt. Dafür können bei gleichbleibendem zeitlichen Versatz der Sendesignale der Sensoren voneinander der Messabstand der Messpunkte und die Distanz der erfassten Abstandswerte voneinander angepasst werden. Oder der zeitliche Versatz der Sendesignale der Sensoren voneinander kann angepasst werden, so dass der Messabstand der Messpunkte am sich bewegenden Bauteil sowie die Distanz zwischen den erfassten Abstandswerten voneinander gleichbleiben.

Vorzugsweise ist die Abtastfrequenz der Sensoren gleich. Besonders bevorzugt sind alle Sensoren des Sensorarrays baugleich. Dabei können elektromagnetische, akustische, induktive, kapazitive, magnetische oder optische Sensoren genutzt werden. Das Sendesignal ist daher bevorzugt ein elektromagnetisches, magnetisches, akustisches, induktives oder optisches Signal. Die Nutzung von elektromagnetischen, magnetischen, kapazitiven oder induktiven Sensoren hat den Vorteil, dass die Messungen nicht durch das Auftreten von Staub oder Schmutz beeinflusst werden.

Dabei kann das Sensorarray in Bewegungsrichtung eine Länge aufweisen, die der Länge des sich bewegenden Bauteils entspricht oder sogar länger ist. Um die Anzahl der benötigten Sensoren jedoch gering zu halten, ist es bevorzugt, dass das Sensorarray kürzer als die Länge des Bauteils vorgesehen ist. Durch mehrfaches Ansteuern der Sensoren kann dennoch eine gegenüber der Länge des Sensorarrays größere Länge des Bauteils erfasst werden. Dabei ist es aber weiterhin bevorzugt, dass das Sensorarray nur eine Teillänge des Bauteils erfasst.

Um die Anzahl der Sensoren des Sensorarrays bei definierter zu erfassender Teillänge des Bauteils weiter zu verringern, oder um mit einer definierten Anzahl der Sensoren des Sensorarrays die erfasste Teillänge des Bauteils zu vergrößern, kann die Steuerungseinheit ebenfalls dazu eingerichtet sein, die Sensoren des Sensorarrays zyklisch zweifach oder mehrfach nacheinander anzusteuern. Dadurch kann die Anzahl der Sensoren bei zweifachem Ansteuern der Sensoren des Sensorarrays halbiert oder entsprechend der Anzahl der Ansteuerungen der Sensoren des Sensorarrays noch weiter verringert werden.

In einer bevorzugten Ausführungsform umfasst die Messanordnung mehrere in einer Erstreckungsrichtung des Bauteils, insbesondere quer zur Bewegungsrichtung des Bauteils, nebeneinander angeordnete Sensorarrays. Dadurch kann die Kontur des Bauteils linienweise erfasst werden. Dabei ist es bevorzugt, dass die mehreren in der Erstreckungsrichtung des Bauteils nebeneinander angeordneten Sensorarrays parallel zueinander angeordnet sind. Vorzugsweise sind die Sensorarrays in Erstreckungsrichtung über eine Breite des Bauteils gleichmäßig verteilt vorgesehen. Dadurch wird die Kontur des Bauteils entlang seiner Breite gleichmäßig linienweise erfasst. Ebenfalls bevorzugt sind bereichsweise mehr Sensorarrays vorgesehen als in anderen Bereichen. Dadurch können relevante Bereiche des Bauteils genauer erfasst werden, als weniger relevante Bereiche des Bauteils. Weiterhin bevorzugt grenzen die mehreren in Erstreckungsrichtung des Bauteils nebeneinander angeordneten Sensorarrays, insbesondere bereichsweise, unmittelbar aneinander an. Dadurch ist eine, insbesondere bereichsweise, Erfassung der vollständigen Kontur des Bauteils möglich. Weiterhin bevorzugt erstrecken sich die Sensorarrays über die gesamte Breite des Bauteils. Dadurch kann die Kontur des Bauteils über seine gesamte Breite erfasst werden.

Die Sensorarrays können zudem in Bewegungsrichtung des Bauteils und/oder in eine Raumrichtung, die sich quer zur Bewegungsrichtung und quer zur Erstreckungsrichtung erstreckt, zueinander versetzt angeordnet sein.

Eine Genauigkeit der Erfassung ist bei unmittelbar aneinander angrenzenden Sensoren und/oder Sensorarrays durch die physikalischen Abmessungen der Sensoren, das heißt einen Sensorabstand der benachbarten Sensoren eines Sensorarrays voneinander, und/oder durch die physikalischen Abmessungen der benachbarten Sensorarrays voneinander begrenzt. Um die Genauigkeit zu erhöhen, können die Sensoren zueinander verschachtelt, das heißt in Raumrichtung zueinander räumlich versetzt, angeordnet sein. Dabei sind die Sensoren in der Raumrichtung in, insbesondere zwei, Reihen übereinander angeordnet. Bei dieser Anordnung kann ein Messsignal eines von dem Bauteil in Raumrichtung weiter entfernten, insbesondere in einer oberen Reihe angeordneten, Sensors durch einen Spalt zwischen zwei zueinander benachbarten, dem Bauteil in Raumrichtung näheren, insbesondere in einer unteren Reihe angeordneten, Sensoren erfasst werden. Um auch bei dieser Anordnung eine taktsynchrone Messung zu gewährleisten, ist es bevorzugt, den räumlichen Versatz der Sensoren in Raumrichtung zueinander bei ihrem Ansteuern durch die Steuerungseinheit, insbesondere bezüglich einer Laufzeitdifferenz und/oder Phasenverschiebung der Sendesignale zueinander, zu berücksichtigen.

Die Messanordnung ermöglicht durch Nutzung mehrerer Sensoren in einem Sensorarray die Erfassung der Kontur eines sich, insbesondere sehr schnell, bewegenden Bauteils. Dabei wird durch zeitlich zueinander versetzte Ansteuerung der Sensoren ein Messsignal nur eines Sensors mit erheblich höherer Abtastfrequenz berechnet.

Die landwirtschaftliche Arbeitsmaschine kann sowohl eine gezogene als auch eine selbstfahrende Arbeitsmaschine sein. Die landwirtschaftliche Arbeitsmaschine ist in einer bevorzugten Ausführungsform ein Feldhäcksler. Die Erfindung eignet sich aber auch für andere, insbesondere selbstfahrende, landwirtschaftliche Arbeitsmaschinen, in denen eine Bauteilüberwachung eines sich bewegenden Bauteils, insbesondere zum Prüfen des Verschleißzustandes des Bauteils, vorteilhaft ist.

In einer bevorzugten Ausführungsform umfasst die landwirtschaftliche Arbeitsmaschine eine Bearbeitungstrommel, die in eine Drehrichtung um eine Drehachse drehbar angeordnet ist. Das sich bewegende Bauteil ist ein Bearbeitungswerkzeug, das an der Bearbeitungstrommel angeordnet ist. Vorzugsweise sind an der Bearbeitungstrommel mehrere Bearbeitungswerkzeuge, insbesondere in Drehrichtung der Bearbeitungstrommel gleichmäßig verteilt, angeordnet. Die Sensoren des Sensorarrays der Messanordnung der landwirtschaftlichen Arbeitsmaschine sind zur Erfassung der Kontur der Bearbeitungswerkzeuge vorgesehen. Besonders bevorzugt erfasst die Messanordnung einen Verschleißzustand der Bearbeitungswerkzeuge.

Vorzugsweise weisen die Sensoren des Sensorarrays dieselbe Entfernung zu einer Drehachse der Bearbeitungstrommel auf. Bei in Raumrichtung zueinander verschachtelten Sensoren eines Sensorarrays weisen bevorzugt jeweils die Sensoren der unteren Reihe und jeweils die Sensoren der oberen Reihe dieselbe Entfernung von der Drehachse auf. Zueinander sind die Sensoren der oberen Reihe zu denen der unteren Reihe um den räumlichen Versatz in Raumrichtung versetzt.

Zudem kann das Sensorarray die Bearbeitungstrommel in Bewegungsrichtung vollumfänglich umgeben. Um die Anzahl der, insbesondere zur Erfassung der Kontur der Bearbeitungswerkzeuge, benötigten Sensoren gering zu halten, ist es aber bevorzugt, dass sich das Sensorarray nur entlang eines Teilumfangs der Bearbeitungstrommel erstreckt. In dieser Ausführungsform ist die Steuerungseinheit vorzugsweise dazu eingerichtet, das Sensorarray für jedes Bearbeitungswerkzeug erneut anzusteuern.

Dabei ist es besonders bevorzugt, dass das Sensorarray einen Triggersensor umfasst, der den Sensoren des Sensorarrays, insbesondere in einem Triggerabstand, in Bewegungsrichtung des Bauteils vorgelagert ist. Der Triggersensor ist dafür vorgesehen, dass Eintreffen des Bearbeitungswerkzeugs, oder bei mehreren an der Bearbeitungstrommel angeordneten Bearbeitungswerkzeugen des aktuellen Bearbeitungswerkzeugs, anzuzeigen. Dabei ist die Steuerungseinheit weiterhin dazu eingerichtet, eine Zeitdifferenz zwischen einem Ansprechen des Triggersensors, das das Eintreffen des Bearbeitungswerkzeugs anzeigt, und dem Senden der Sendesignale der Sensoren in Abhängigkeit von dem Triggerabstand des Triggersensors zu seinem in Bewegungsrichtung nachgeordneten Sensor sowie der aktuellen Geschwindigkeit des, insbesondere aktuellen, Bearbeitungswerkzeugs zu bestimmen. Um eine Abweichung von einer konstanten Geschwindigkeit des sich bewegenden Bauteils zu erfassen, ist es bevorzugt, dass die Messanordnung dafür einen Geschwindigkeitssensor umfasst. Weiterhin ist die Steuerungseinheit dieser Ausführungsform der Messanordnung dazu eingerichtet, die Sensoren des Sensorarrays nach Ablauf dieser Zeitdifferenz aufeinander folgend anzusteuern.

In einer ganz besonders bevorzugten Ausführungsform ist die Bearbeitungstrommel eine Häckseltrommel und die Bearbeitungswerkzeuge sind Messer, wobei die Messanordnung zur Erfassung der Kontur einer Schneidkante der Messer und/oder einer Schlifffläche der Messer vorgesehen ist. Die Schneidkante sowie die Schlifffläche stellen lediglich einen kleinen Teilbereich der Messer dar. Die Anzahl der Sensoren des Sensorarrays kann daher bei dieser Anwendung der Messanordnung soweit beschränkt werden, wie sie für die Bestimmung der Kontur nur eines solchen kleinen Teilbereichs notwendig ist. Dabei wird beim Drehen der Häckseltrommel während eines vollständigen Umlaufs bevorzugt jede der Schneidkanten erfasst, wobei das Eintreffen des aktuellen Bearbeitungswerkzeugs am Sensorarray jeweils durch den Triggersensor angezeigt wird.

Das Bearbeitungswerkzeug ist in einer bevorzugten Ausführungsform ein Messer, insbesondere ein Häckselmesser. Dabei ist die Auswertungseinheit bevorzugt dazu eingerichtet, den Verschleißzustand des Messers zu bestimmen. Vorzugsweise wird dafür die Kontur des Messers erfasst und mit einem Referenzwert, insbesondere einer Referenzkontur, verglichen. Dadurch kann eine Verschiebung der Schneidkante und/oder eine Verkürzung der Schlifffläche erfasst werden. Alternativ oder zusätzlich kann ein unscharfer, insbesondere rampenförmiger oder bogenförmiger, Verlauf der Schneidkante erfasst werden, indem eine Steigung der Schneidkante erfasst wird.

Dadurch kann der Verschleiß der Messer und/oder der Schärfegrad der Messer im laufenden Betrieb der Arbeitsmaschine, insbesondere während des Erntebetriebs beim Feldeinsatz, insbesondere kontinuierlich oder zu voreingestellten Zeitpunkten, erfasst werden. Vorzugsweise ist die Steuerungseinheit dabei dazu eingerichtet, die Kontur des Bearbeitungswerkzeugs und/oder seinen Verschleißzustand an einer Benutzerschnittstelle anzuzeigen. Dabei ist die Benutzerschnittstelle bevorzugt in einer Fahrerkabine der landwirtschaftlichen Arbeitsmaschine angeordnet. Sie kann ein Bestandteil der landwirtschaftlichen Arbeitsmaschine sein, oder als ein mobiles Gerät ausgebildet sein. Ein Bediener der Arbeitsmaschine hat dann die Möglichkeit, die stumpfen Messer der Trommel in einem Messerschleifbetrieb der Arbeitsmaschine bereits auf dem Feld zu schleifen.

Die Aufgabe wird weiterhin gelöst mit einer Messanordnung für eine solche landwirtschaftliche Arbeitsmaschine. Die Messanordnung umfasst:
- mindestens einen Sender zum Aussenden eines Sendesignals,
- ein Sensorarray mit mindestens zwei in Bewegungsrichtung des Bauteils hintereinander angeordneten Sensoren, die jeweils dazu eingerichtet sind, eine Messung durch Empfangen eines von dem Bauteil an einem Messpunkt reflektierten Messsignals durchzuführen,
- eine Steuerungseinheit, die dazu eingerichtet ist, die Sensoren des Sensorarrays in Bewegungsrichtung des Bauteils mit derselben Abtastfrequenz aufeinander folgend anzusteuern, und
- eine Auswertungseinheit, die dazu eingerichtet ist, aus den Messsignalen der Sensoren jeweils einen Abstandswert des Sensors von dem Bauteil zu bestimmen.

Die Auswertungseinheit ist weiterhin bevorzugt dazu eingerichtet, ein Kontursignal der Kontur des sich bewegenden Bauteils mit einer gegenüber der Abtastfrequenz der Sensoren höheren Frequenz durch Aneinanderreihen der Messsignale der Sensoren zu berechnen.

Die Aufgabe wird weiterhin gelöst mit einem Verfahren zum Messen der Kontur eines sich in eine Bewegungsrichtung bewegenden Bauteils einer landwirtschaftlichen Arbeitsmaschine, bei dem zumindest zwei oder mehr in Bewegungsrichtung des Bauteils hintereinander angeordnete Sensoren eines Sensorarrays einer Messanordnung in Bewegungsrichtung des Bauteils aufeinanderfolgend eine Messung durchführen, wobei aus den von den Sensoren empfangenen Messsignalen jeweils ein Abstandswert der Sensoren von dem Bauteil ermittelt wird, und wobei ein Kontursignal der Kontur des sich bewegenden Bauteils mit einer gegenüber der Abtastfrequenz der Sensoren höheren Abtastfrequenz durch Aneinanderreihen der in Bewegungsrichtung des Bauteils aufeinander folgenden Abstandswerte berechnet wird.

Die Sensoren des Sensorarrays werden dabei bevorzugt mit einem zeitlichen Versatz zueinander angesteuert.

Die Messanordnung sowie das Verfahren ermöglichen die Erfassung der Kontur eines sich bewegenden Bauteils, insbesondere die Überwachung eines Verschleißzustands des sich bewegenden Bauteils, auch bei sehr hoher Geschwindigkeit des Bauteils mit einer sehr großen Auflösung.

Bevorzugt ist das sich bewegende Bauteil ein Bearbeitungswerkzeug, insbesondere ein Messer, einer Bearbeitungstrommel, insbesondere einer Häckseltrommel eines Feldhäckslers. Ganz besonders bevorzugt wird die Kontur einer Schneidkante des Messers erfasst. Dafür ist es zudem bevorzugt vorgesehen, das Eintreffen jedes Messers der Häckseltrommel am Sensorarray jeweils zu erfassen. Vorzugsweise wird dafür ein Triggersensor genutzt. Eine Zeitdifferenz zwischen dem Ansprechen des Triggersensors und dem Senden der Sendesignale der Sensoren des Sensorarrays wird dabei in Abhängigkeit vom Triggerabstand des Triggersensors zu seinem in Bewegungsrichtung benachbarten, nachgeordneten Sensor sowie der aktuellen Geschwindigkeit des aktuellen Messers, insbesondere durch Erfassen der Geschwindigkeit der Häckseltrommel, bestimmt.

Mit dem Verfahren kann der Schärfegrad und/oder Verschleiß des sich bewegenden Bauteils, insbesondere der an einer Häckseltrommel angeordneten Messer, im laufenden Betrieb der Arbeitsmaschine, insbesondere im laufenden Erntebetrieb des Feldhäckslers, im Feldeinsatz gemessen werden. Dies kann dem Bediener angezeigt werden. Insbesondere hat der Bediener dadurch die Möglichkeit, stumpfe Messer bereits im Feldeinsatz im Messerschleifbetrieb zu schärfen und/oder verschlissene Messer rechtzeitig auszutauschen.

Die Aufgabe wird weiterhin gelöst mit einem Verfahren zum Erfassen eines Verschleißzustandes eines Messers einer Häckseltrommel, bei dem ein Eintreffen einer Schneidkante mit einem Referenzzeitpunkt und/oder eine Steigung einer Schneidkante mit einer Referenzsteigung verglichen werden und anhand der Differenz ein Verschleißgrad bestimmt wird.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) eine landwirtschaftliche Arbeitsmaschine, und in (b) einen Schnitt aus einem Ausschnitt aus der landwirtschaftlichen Arbeitsmaschine aus (a);
- Fig. 2: in (a) schematisch eine Stirnseite einer Bearbeitungstrommel, an der Bearbeitungswerkzeuge angeordnet sind, in (b) einen erwarteten Verlauf einer Kontur der Bearbeitungstrommel aus (a), in (c) schematisch die Bearbeitungstrommel aus (a) mit einer Messanordnung zum Erfassen einer Kontur der Bearbeitungstrommel, in (d) einen Verlauf einer mit der Messanordnung erfassten Kontur, und in (e) beispielhaft eine Bearbeitungstrommel in einer Seitenansicht;
- Fig. 3: schematisch ein sich geradlinig bewegendes Bauteil sowie eine Messanordnung zum Erfassen einer Kontur des sich bewegenden Bauteils;
- Fig. 4: schematisch ein sich bewegendes Bauteil und eine weitere Ausführungsform einer Messanordnung zum Erfassen der Kontur des sich bewegenden Bauteils.

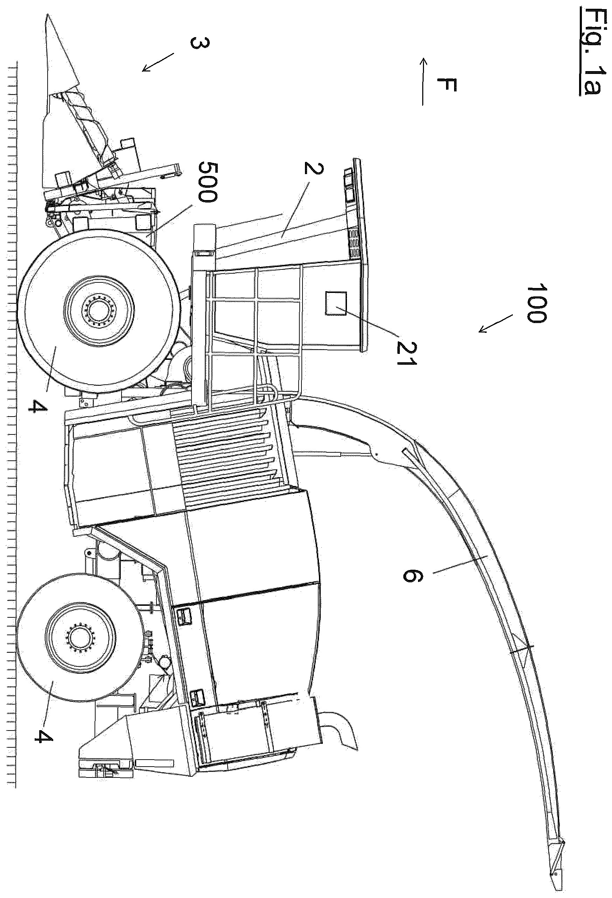

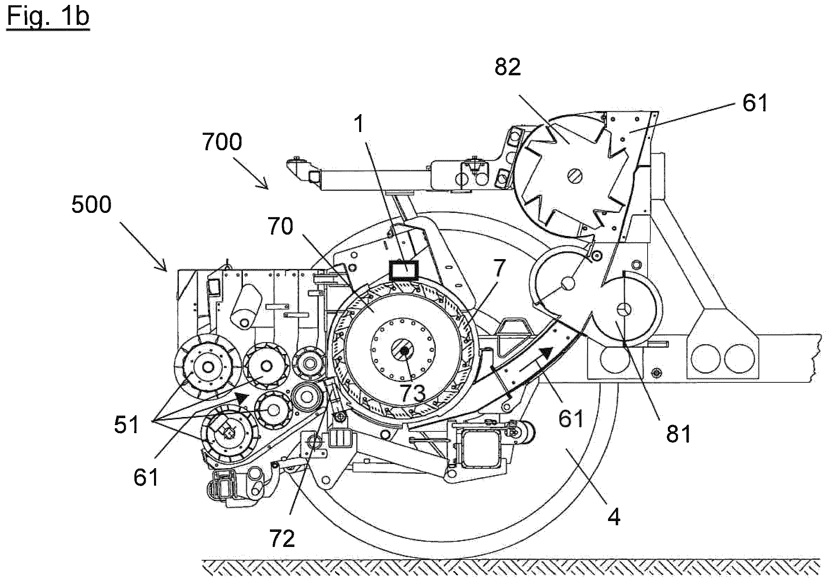

Fig. 1 zeigt in (a) eine erfindungsgemäße landwirtschaftliche Arbeitsmaschine 100. Es handelt sich um einen selbstfahrenden Feldhäcksler. Im Folgenden werden daher die Begriffe landwirtschaftliche Arbeitsmaschine 100 und Feldhäcksler synonym verwendet. Die Erfindung ist aber nicht auf Feldhäcksler 100 und/oder selbstfahrende Arbeitsmaschinen 100 beschränkt, sondern auch auf andere landwirtschaftliche Arbeitsmaschinen 100 anwendbar, beispielsweise auf selbstfahrende oder gezogene Ballenpressen, Heuwerbungsmaschinen, Mähmaschinen und weitere.

Der Feldhäcksler 100 weist ein Einzugsaggregat 500 auf, das in einem Erntebetrieb (nicht bezeichnet), in der der Feldhäcksler 100 in eine Fahrtrichtung F über ein Feld (nicht gezeigt) gefahren wird, zum Einziehen von Erntegut (nicht gezeigt) in den

Feldhäcksler 100 vorgesehen ist. Das Einzugsaggregat 500 ist zwischen vorderen Rädern 4 des Feldhäckslers in Fahrtrichtung F vorne angeordnet. Am Einzugsaggregat 500 ist ein Vorsatzgerät 3, beispielsweise ein Maisgebiss oder eine Pick- up zur Aufnahme von Heu, befestigt. Mit dem Vorsatzgerät 3 wird das Erntegut geschnitten und/oder in das Einzugsaggregat 500 gefördert. Der Feldhäcksler 100 ist zum Zerkleinern des Ernteguts vorgesehen. Er weist ein Auswurfrohr 6 zum Auswerfen des zerkleinerten Ernteguts auf einen Transportwagen (nicht gezeigt) auf.

Dem Einzugsaggregat 500 ist ein Häckselaggregat 700 (s. Fig. 1 (b)) nachgeordnet, dass zum zerkleinern des Ernteguts vorgesehen ist. Sowohl das Einzugsaggregat 500 als auch das Häckselaggregat 700 sind zum Bearbeiten des Ernteguts vorgesehen und daher Arbeitsaggregate im Sinne der Erfindung.

Fig. 1 (b) zeigt einen Ausschnitt aus der landwirtschaftlichen Arbeitsmaschine 100. Dargestellt ist ein Schnittbild, in dem ein Förderkanal 61, durch den das Erntegut zum Auswurfrohr 6 gefördert wird, sichtbar ist. Der Förderkanal 61 ist durch einen Pfeil bezeichnet, der in eine Förderrichtung des Ernteguts zeigt.

Das Einzugsaggregat 500 weist drei paar Förder- und Presswalzen 51 auf, zwischen denen sich der Förderkanal 61 erstreckt, und die zum Fördern und Pressen des Ernteguts vorgesehen sind. Mit den Förder- und Presswalzen 51 wird das Erntegut einer Bearbeitungstrommel 70 des Häckselaggregats 700 zugeführt. Die Bearbeitungstrommel 70 ist daher eine Häckseltrommel. Im Folgenden werden die Begriffe Bearbeitungstrommel 70 und Häckseltrommel synonym verwendet.

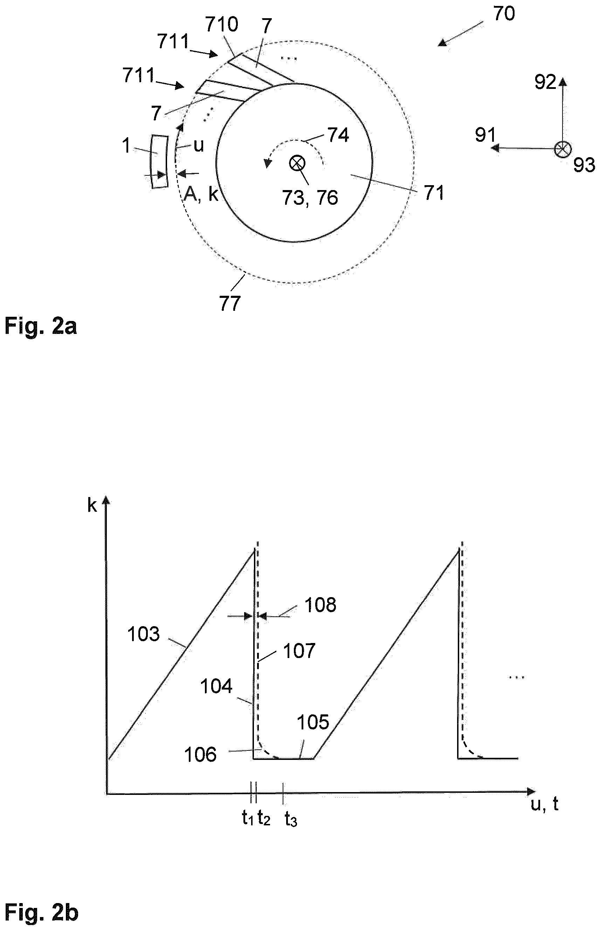

Die Häckseltrommel 70 wird im Betrieb des Feldhäckslers 100 um eine Drehachse 73 in eine Drehrichtung 74 (s. Fig. 2a) gedreht. An der Häckseltrommel 70 sind in Drehrichtung 74 um die Häckseltrommel 70 gleichmäßig verteilt Messer 7 (s. Fig. 2(a)) angeordnet, die zum Schneiden des Ernteguts vorgesehen sind. Im Erntebetrieb des Feldhäckslers 100 drehen sich die Messer mit der Häckseltrommel 70 in die Drehrichtung 74. Dabei gerät das Erntegut in Eingriff der Messer 7 und wird jeweils zwischen einem der Messer 7 und einer Gegenschneide 72 abgeschnitten.

Der Häckseltrommel 70 in Förderrichtung nachgeordnet ist ein Aufbereiter 81 vorgesehen, der bei der Maisernte zum Aufbrechen der Maiskörner dient. Der Aufbereiter 81 ist im Heubetrieb nicht vorgesehen. Anschließend wird das Erntegut in einem Nachbeschleuniger 82 beschleunigt und danach durch das Auswurfrohr 6 (s. Fig. 1 (a)) in den Transportwagen gefördert.

An der Häckseltrommel 70 ist eine Messanordnung 1 vorgesehen, die zum Erfassen einer Kontur k (s. Fig. 2 (b)) der Bearbeitungstrommel 70 vorgesehen ist. Dabei wird die Kontur k der Messer erfasst. Anhand ihrer Kontur k ist ein Schärfegrad der Messer 7 und/oder ein Verschleißzustand der Messer 7 erfassbar.

Sofern Messer 7 der Häckseltrommel 70 unscharf oder verschlissen sind, wird dies einem Bediener des Feldhäckslers 100 an einer Anzeige 21 (s. Fig. 1 (a)) einer Benutzerschnittstelle, die in einer Fahrerkabine 2 des Feldhäckslers 100 angeordnet ist, angezeigt. Es kann auch vorgesehen sein, einen solchen Verschleißzustand an einer Benutzerschnittstelle (nicht gezeigt) eines entfernten, über eine Kommunikationsschnittstelle (nicht gezeigt) wie beispielsweise Funk oder Mobilfunk mit dem Feldhäcksler 100 verbundenen Computers (nicht gezeigt), insbesondere eines Home- oder Office- PC' s, eines Laptop' s oder Tablet' s oder eines Smartphone' s, anzuzeigen.

Durch die Anzeige des Verschleißzustandes der Messer 7 können verschlissene Messer 7 rechtzeitig vorbestellt und/oder ausgetauscht werden.

Unscharfe Messer 7 können bereits im Feldeinsatz in einem Messerschleifbetrieb (nicht gezeigt) des Feldhäckslers 100 nachgeschliffen werden. Eine im Feldhäcksler 100 integrierte Schleifvorrichtung (nicht gezeigt) fährt im Messerschleifbetrieb die Messer 7 ab und schleift sie. Anschließend wird die Gegenschneide 72 (s. Fig. 1 (b)) neu eingestellt.

Die Häckseltrommel 70 ist in Fig. 2 (a) schematisch dargestellt. Sie ist in Drehrichtung 74 um die Drehachse 73 drehbar. Sie weist einen Trommelkörper 71 auf, an dem außenseitig Messer 7 befestigt sind, die sich beim Drehen der Häckseltrommel 70 mit dieser um die Drehachse 73 in die Drehrichtung 74 drehen. Die physikalischen Abmessungen und die Form der Messer 7 ist hier nur beispielhaft und schematisch gezeigt. Dargestellt sind hier zudem lediglich zwei der Messer 7. Die Häckseltrommel 70 weist jedoch eine Vielzahl Messer 7 auf, die in Drehrichtung 74 gleichmäßig verteilt vorgesehen sind. Die Messer 7 weisen jeweils eine Schneidkante 711 auf, die beim Schneiden des Ernteguts mit der Gegenschneide 72 zusammenwirkt.

Ein Außenumfang der Häckseltrommel 70 ist durch eine gestrichelte Linie 77, die eine Schlifffläche 710 der Messer 7 miteinander verbindet, schematisch gezeigt.

Die Häckseltrommel 70 erstreckt sich in eine Erstreckungsrichtung 76, die sich in Richtung der Drehachse 73 erstreckt. Die Messer 7 erstrecken sich entlang wenigstens eines Teils des Trommelkörpers 71 der Häckseltrommel 70. Sie können parallel zur Erstreckungsrichtung 76 ausgerichtet sein. Es ist aber bevorzugt, dass sie in einem Winkel zur Erstreckungsrichtung 76 angeordnet sind.

Bei unscharfem oder verschlissenem Messer 7 wird zum Schneiden des Ernteguts erheblich mehr Energie benötigt und das Erntegut kann zudem zerfasern. Daher ist es vorteilhaft, den Verschleißzustand der Messer 7 regelmäßig, insbesondere kontinuierlich oder zu bestimmten Zeitpunkten, zu erfassen und das Nachschleifen oder Austauschen der Messer 7 rechtzeitig durchzuführen.

Dafür sieht die Messanordnung 1 vor, die Kontur k jedes der Messer 7, insbesondere die Schneidkante 711 und/oder die Schlifffläche jedes der Messer 7, zumindest reihenweise oder bereichsweise zu erfassen. In Fig. 2 (b) ist ein erwarteter Verlauf der Kontur k der Häckseltrommel 70 aus Fig. 2 (a) schematisch dargestellt.

Auf einer Abszisse ist ein entlang des Außenumfangs 77 zurückgelegter Weg u dargestellt. Auf der Ordinate ist der Verlauf der Kontur k der Häckseltrommel 70 dargestellt. Da sich die Häckseltrommel 70 während der Messung dreht, zeigt die Figur gleichzeitig die Änderung der Kontur k an der Messanordnung 1 über die Zeit.

In einem ersten Bereich 103 zwischen zwei benachbarten Messern 7 steigt ein Abstand A (s. Fi. 2 (c)) eines Sensors 111 - 11n der Messanordnung 1 von der Häckseltrommel 70 zunächst an. Bei Erreichen einer Schneidkante 711 eines Messers 7 verringert sich der Abstand A in einem zweiten Bereich 104 sprungartig. Die Schlifffläche 710 der Messer 7 erstreckt sich bei scharfem Messer 7 etwa entlang des Außenumfangs 77, so dass in einem dritten Bereich 105 der Abstand A bei scharfem Messer 7 etwa gleichbleibend ist. Dieser Verlauf wiederholt sich für jedes Messer 7.

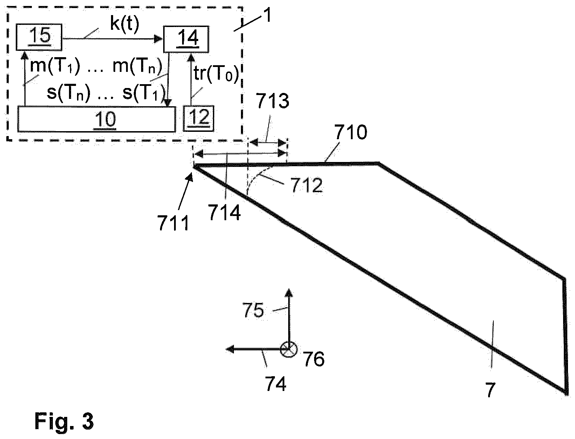

In Fig. 3 ist die Schneidkante 712 bei unscharfem Messer 7 in gestrichelten Linien schematisch gezeigt. Bei unscharfem Messer 7 verläuft die Schneidkante 712 jedoch ungerade, insbesondere abgerundet. Sie ist gegenüber der Schneidkante 711 bei scharfem Messer 7 mit dem Bezugszeichen 712 bezeichnet.

Durch die Abnutzung verkürzt sich die Schlifffläche 710. Daher verschieb sich bei unscharfem Messers 7 die sprungartige Verringerung des Abstandes A im zweiten Bereich 104. Sie tritt somit später ein. Die zeitliche Verschiebung ist in Fig. 2 (b) durch zwei Pfeile 108 schematisch dargestellt.

Zudem ist die Schneidkante 711, 712 bei unscharfem Messer 7 nicht scharfkantig sondern beispielsweise abgerundet ausgebildet, so dass sich der Abstand A an der Schneidkante 711, 712 langsamer verringert. Die Schneidkante 711, 712 weist daher eine andere Steigung (nicht bezeichnet) auf. Ein Übergang 106 vom zweiten 104 zum dritten Bereich 105 verläuft daher ebenfalls ungerade und ist hier beispielhaft bogenförmig dargestellt.

Dies kann zur Erfassung des Verschleißzustandes des Messers 7 der Häckseltrommel 70 genutzt werden. Dabei wird ein Verschleißgrad des Messers bestimmt, indem das Eintreffen der Schneidkante 711, 712 mit einem Referenzzeitpunkt t1 und/oder die Steigung der Schneidkante 711, 712 mit einer Referenzsteigung verglichen werden. Anhand der Differenz 108 kann dann auf einen Verschleißgrad geschlossen werden.

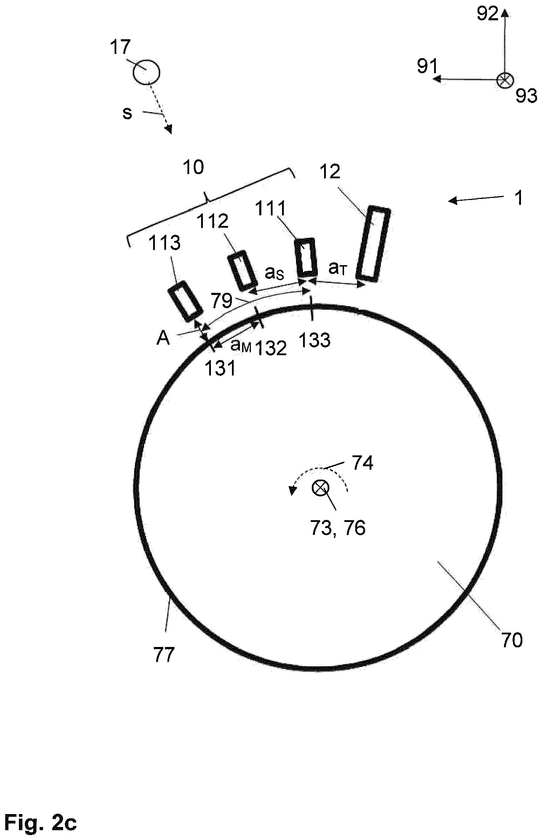

In Fig. 2 (c) ist die Häckseltrommel 70 der Fig. 2 (a) schematisch gezeigt. Dargestellt ist lediglich der Außenumfang 77 der Häckseltrommel 70. Um die Kontur k der Häckseltrommel 70 zu erfassen, ist eine Messanordnung 1 vorgesehen. Die Messanordnung 1 weist ein Sensorarray 10 mit mehreren, hier beispielhaft drei, Sensoren 111 - 113 auf. Die Sensoren 111 -113 sind baugleich. Sie sind in eine Bewegungsrichtung 74 der Häckseltrommel 70, das heißt hier in eine Drehrichtung 74 um die Drehachse 74 der Häckseltrommel 70, fluchtend hintereinander angeordnet und weisen denselben Sensorabstand as voneinander auf. Um ihre Anzahl gering zu halten, erstrecken sie sich lediglich über einen Teilumfang 79 der Häckseltrommel 70. Sie sind zum Erfassen von Teilbereichen der Häckseltrommel 70, insbesondere jeweils der Schneidkante 711, 712 und/oder der Schlifffläche 710 der Messer 7, vorgesehen.

Die Sensoren 111 - 113 weisen zudem alle dieselbe Entfernung (nicht bezeichnet) zur Drehachse 73 der Häckseltrommel 70 auf. Das Sensorarray 10 erstreckt sich daher im Wesentlichen parallel zum Außenumfang 77 der Häckseltrommel 70. Dadurch können die Sensoren 111 - 113 eine sich verändernde Kontur k am Außenumfang 77 der Häckseltrommel 70 durch eine Abstandsmessung im laufenden Betrieb der Häckseltrommel 70, in dem sich diese in die Drehrichtung 74 dreht, erfassen.

Dafür weist die Messanordnung 1 mindestens einen Sender 17 auf, der ein Sendesignal s sendet, das auf die Häckseltrommel 70 auftrifft. Das Sendesignal s wird an der Häckseltrommel 70 zumindest teilweise reflektiert. Die Sensoren 111 - 113 sind jeweils dazu eingerichtet, den in einem Messpunkt 131 - 133 reflektierten Anteil des Sendesignals s zu empfangen. Dieser Anteil ist im Rahmen dieser Erfindung als Messsignal m bezeichnet. Durch eine herkömmlich bekannte Analyse einer Laufzeitdifferenz und/oder Phasenverschiebung zwischen dem Sendesignal s und dem Messsignal m kann ein Abstandswert der Häckseltrommel 7 im Messpunkt 131 - 133 von dem Sensor 111 - 113 berechnet werden.

Anstelle nur eines einzigen Senders 17 können auch mehrere Sender 17 vorgesehen sein. Vorteilhaft ist eine Ausführungsform, bei der jedem Sensor 111 - 113 jeweils ein Sender 17 zugeordnet ist. Besonders vorteilhaft sind jeweils ein Sensor 111 - 113 und ein Sender 17 in eine Sende- / Empfangseinheit integriert.

Eine Steuerungseinheit 14 (s. Fig. 3) der Messanordnung 1 ist dazu eingerichtet, die Sensoren 111 - 113 des Sensorarrays 10 in Drehrichtung 74 der Häckseltrommel 7 aufeinander folgend anzusteuern. Da die Sensoren 111 - 113 in Bewegungsrichtung 74 des Bauteils 7 voneinander beabstandet sind, ist die Steuerungseinheit dazu eingerichtet, die Messungen der Sensoren 111 - 113 mit einem zeitlichen Versatz Δt zueinander durchführen. Der zwischen benachbarten Sensoren 111 - 113 jeweils erforderliche zeitliche Versatz Δt kann in Abhängigkeit von ihrer Position relativ zueinander vorab berechnet werden.

Weiterhin weist die Messanordnung 1 eine Auswertungseinheit 15 auf, die zum Verarbeiten der Messsignale m des Sensorarrays 10 vorgesehen ist. Die Auswertungseinheit 15 ist dazu eingerichtet, aus jedem Messsignal m jeweils den Abstandswert A des Sensors 111- 113 von der Häckseltrommel 70 zu ermitteln. Zudem ist sie dazu eingerichtet, aus den ermittelten Abstandswerten A den Verlauf der Kontur k des Bauteils 7 zu bestimmen. Dafür werden die ermittelten Abstandswerte A der Sensoren 111 - 113 in ihrer in Drehrichtung 74 der Häckseltrommel 7 aufeinander folgenden Reihenfolge aneinandergereiht.

Um das Eintreffen eines nächsten, an der Häckseltrommel 70 angeordneten Messers 7 zu signalisieren, weist die Messanordnung 1 einen Triggersensor 12 auf. Der Triggersensor 12 ist in einem definierten Triggerabstand a_{T} zum nachgeordneten Sensor 111 angeordnet, so dass ein Eintreffen der Schneidkante 711 des Messers 7 von der Steuerungseinheit 14 erfassbar ist und beim Ansteuern der Sensoren 111 - 113 berücksichtigt werden kann. Dadurch können die Sensoren 111 - 113 des Sensorarrays 10 so gesteuert werden, dass lediglich der relevante Bereich 79 erfasst wird.

Um eine gleichbleibende Messgenauigkeit zu erzielen, so dass der Messabstand a_{M} zweier benachbarter Messpunkte 131 - 133 an der Häckseltrommel 70 für möglichst alle Messungen gleichbleibend ist, ist der Sensorabstand as der Sensoren 111 - 113 voneinander bevorzugt gleich. Dadurch kann die Steuerungseinheit 14 die Sensoren 111 - 113 bei konstanter Drehgeschwindigkeit der Häckseltrommel 70 mit einem gleichbleibenden zeitlichen Versatz Δt ansteuern.

Um eine Änderung der Drehgeschwindigkeit der Häckseltrommel 70 berücksichtigen zu können, kann ein Geschwindigkeitssensor (nicht gezeigt) vorgesehen sein, der die Drehgeschwindigkeit der Häckseltrommel 70 misst. Die Veränderung der Drehgeschwindigkeit der Häckseltrommel 70 kann aber beispielsweise auch durch eine Änderung einer zwischen dem Eintreffen zweier Messer 7 vergehenden Zeitspanne, beispielsweise mit dem Triggersensor 12, erfasst werden.

Bei Änderung der Drehgeschwindigkeit der Häckseltrommel 70 ist die Steuerungseinheit 14 dazu eingerichtet, den zeitlichen Versatz Δt der Sendesignale s zueinander so anzupassen, dass der Messabstand a_{M} der Messpunkte 131 - 133 sich möglichst nicht ändert.

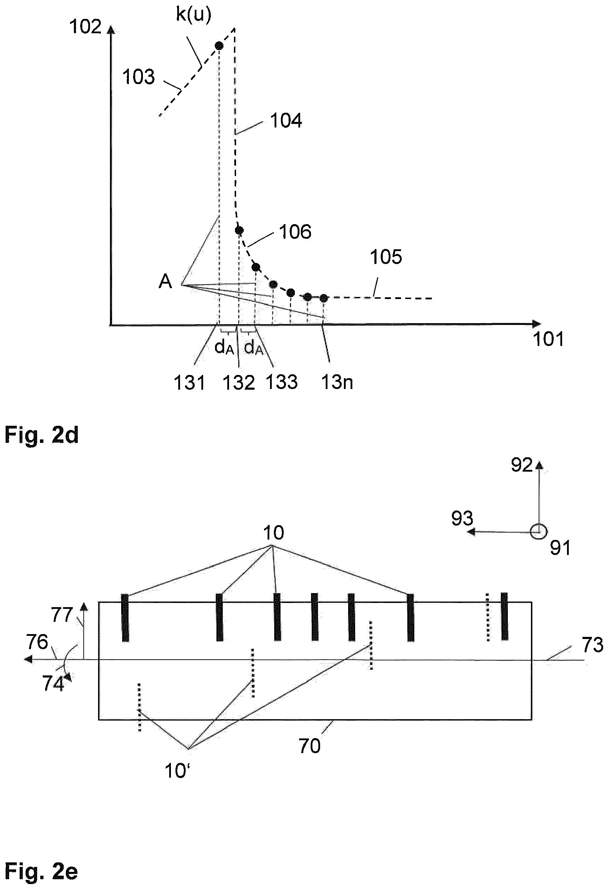

Fig. 2 (d) zeigt beispielhaft einen Verlauf einer mit der Messanordnung 1 erfassten Kontur k eines Messers 7 der Häckseltrommel 70. Die erfassten Abstandswerte A sind in einer im Wesentlichen gleichbleibenden Distanz d_{A} zueinander, die zu dem Messabstand a_{M} der Messpunkte 131 - 13n auf der Häckseltrommel 70 korrespondierend ist, auf der Abszisse 101 in der Reihenfolge aufgetragen, die der Anordnung der Sensoren 111 - 11n im Sensorarray 10 in Drehrichtung 74 entspricht. Die Abstandswerte A können zudem dem erwarteten Verlauf der Kontur k entsprechend verbunden werden. Der dargestellte Verlauf der Kontur k entspricht dann im Wesentlichen dem Negativ der Kontur der Häckseltrommel 70 in dem vermessenen Teilbereich 79.

Fig. 2 (e) zeigt beispielhaft eine Seitenansicht einer solchen Häckseltrommel 70 mit einer Messanordnung 1, die mehrere Sensorarrays 10 umfasst. Die Sensorarrays 10 erstrecken sich jeweils in Drehrichtung 74 der Häckseltrommel 70. Sie sind in Erstreckungsrichtung 76 des Bauteils 7 nebeneinander und parallel zueinander angeordnet. Dabei sind in einem mittleren Bereich (nicht bezeichnet) der Häckseltrommel 70 mehrere Sensorarrays 10 geringer zueinander beabstandet vorgesehen, als in einem äußeren Bereich (nicht bezeichnet) der Häckseltrommel 70. Dadurch wird der mittlere Bereich, in dem beispielsweise ein größerer Verschleiß erwartet wird, stärker überwacht, als der äußere Bereich.

Die Sensorarrays 10 können alternativ auch nur bereichsweise an der Häckseltrommel 70 angeordnet sein.

In gestrichelten Linien ist eine alternative Anordnung mehrerer in Erstreckungsrichtung 76 etwa gleichweit voneinander beabstandet vorgesehener Sensorarrays 10' gezeigt. Die Sensorarrays 10' dieser Anordnung sind in Drehrichtung 74 der Häckseltrommel 70 zueinander versetzt angeordnet.

In den Fig. 3 ist ein sich geradlinig bewegendes Bauteil 7 dargestellt. Bei dem Bauteil 7 handelt es sich ebenfalls um ein Messer 7. Die Figur zeigt sowohl eine Schneidkante 711 des scharfen Messers 7 in einer durchgezogenen Linie 711 als auch eines unscharfen Messer 7 in einer gestrichelten Linie 112. Sichtbar ist, dass sich die Schneidkante 712 durch die Abnutzung verschiebt, so dass sich eine Länge 713 der Schlifffläche 710 des unscharfen Messers 7 gegenüber der Länge 714 der Schlifffläche 710 des scharfen Messers 7 verkürzt. Die Längendifferenz beträgt in der Regel weniger als 1mm.

Um die Kontur k des Messers 7 zu erfassen, ist die Messanordnung 1 vorgesehen. Die Messanordnung 1 weist einen Triggersensor 12 auf, der der Steuerungseinheit 14 anhand eines Triggersignals tr das Eintreffen des Messers 7 anzeigt. Die Steuerungseinheit 14 ist dazu eingerichtet, die Sensoren 111 - 11n des Sensorarrays 10 aufeinanderfolgend mit demselben zeitlichen Versatz Δt zueinander taktsynchron anzusteuern, sobald das Messer 7 den Sensor 111, welcher dem Triggersensor 12 nachgelagert ist, erreicht hat.

Dafür sendet jeder der Sensoren 111 - 11n ein Sendesignal s mit einer definierten Messfrequenz aus und empfängt ein reflektiertes Messsignal m. Die Auswertungseinheit 15 ist dazu eingerichtet, aus jedem der Messsignale m der Sensoren 111 - 11n den Abstandswert A des Sensors 111 - 11n vom Bauteil 7 zu ermitteln. Weiterhin ist die Auswertungseinheit 15 dazu eingerichtet, die Kontur k des Bauteils 7 zu berechnen, indem die Abstandswerte A in der Reihenfolge ihrer Messung aneinandergereiht werden.

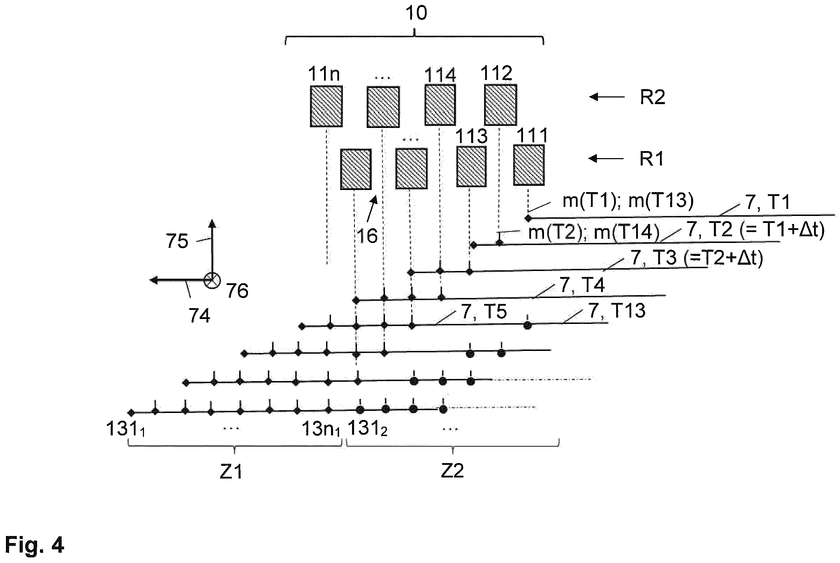

Fig. 4 zeigt eine weitere Ausführungsform einer Messanordnung 1, bei der die Sensoren 111 - 11n in eine Raumrichtung 75 quer zur Bewegungsrichtung 74 verschachtelt angeordnet sind. Die Sensoren 111 - 11n sind daher zweireihig übereinander angeordnet. Dadurch können sie enger zueinander angeordnet werden.

Die Sensoren 111 - 11n der oberen Reihe R2 senden ihr Sendesignal s durch einen Spalt 16 zwischen den Sensoren 111 - 11n der unteren Reihe R1.

Zudem werden bei diesem Ausführungsbeispiel die Sensoren 111 - 11n mehrfach zyklisch angesteuert. Dadurch werden weniger Sensoren 111 - 11n benötigt. Dargestellt sind die erfassten Messpunkte 131₁ - 13n₁ eines ersten Zyklus Z1 und ein Teil der erfassten Messpunkte 131₂ - 13n₂ eines zweiten Zyklus Z2. Dabei ist das Bauteil 7 lediglich zu Darstellungszwecken in Raumrichtung 75 zu den Sensoren 111 - 11n versetzt dargestellt.

## Patentansprüche

1. Landwirtschaftliche Arbeitsmaschine (100), insbesondere Feldhäcksler, mit einem Arbeitsaggregat, insbesondere einem Häckselaggregat (700), das zur Verarbeitung von Erntegut vorgesehen ist, mit einer Messanordnung (1) und mit einem sich in einem Betrieb der Arbeitsmaschine (100) in eine Bewegungsrichtung (74) bewegenden Bauteil (7), wobei die Messanordnung (1) aufweist:
• mindestens einen Sender (17) zum Aussenden eines Sendesignals (s),
• ein Sensorarray (10) mit mindestens zwei in Bewegungsrichtung (74) des Bauteils (7) hintereinander angeordneten Sensoren (111 - 11n), die jeweils dazu eingerichtet sind, eine Messung durch Empfangen eines von dem Bauteil (7) in einem Messpunkt (131 - 13n) reflektierten Messsignals (m) durchzuführen,
• eine Steuerungseinheit (14), die dazu eingerichtet ist, die Sensoren (111 - 11n) des Sensorarrays (10) in Bewegungsrichtung (74) des Bauteils (7) mit derselben Abtastfrequenz aufeinander folgend anzusteuern, und
• eine Auswertungseinheit (15), die dazu eingerichtet ist, aus den Messsignalen (m) der Sensoren (111 - 11n) jeweils einen Abstandswert (A) des Sensors (111 - 11n) von dem Bauteil (7) zu bestimmen.

2. Landwirtschaftliche Arbeitsmaschine (100) nach Anspruch 1, **dadurch gekennzeichnet, dass** die Auswertungseinheit (15) dazu eingerichtet ist, ein Kontursignal (k) der Kontur des sich bewegenden Bauteils (7) mit einer gegenüber der Abtastfrequenz der Sensoren (111 - 11n) höheren Frequenz durch Aneinanderreihen der Messsignale (m) der Sensoren (111 - 11n) zu berechnen.

3. Landwirtschaftliche Arbeitsmaschine (100) nach einem der vorherigen Ansprüche, **dadurch gekennzeichnet, dass** die Auswertungseinheit (15) dazu eingerichtet ist, zueinander benachbarte Abstandswerte (A) mit einer Distanz (d_{A}) voneinander anzuordnen, die durch den Sensorabstand (as) der Sensoren (111 - 11n) voneinander, eine Frequenz des Sendesignals (s) sowie eine aktuelle Geschwindigkeit des Bauteils (7) bestimmt ist.

4. Landwirtschaftliche Arbeitsmaschine (100) nach einem der vorherigen Ansprüche, **dadurch gekennzeichnet, dass** die Auswertungseinheit (15) dazu eingerichtet ist, einen Verschleißzustand des sich bewegenden Bauteils (7) durch Vergleich seiner Kontur (k) mit Referenzwerten zu bestimmen.

5. Landwirtschaftliche Arbeitsmaschine (100) nach einem der vorherigen Ansprüche, **dadurch gekennzeichnet, dass** die Steuerungseinheit (14) dazu eingerichtet ist, die Sensoren (111 - 11n) des Sensorarrays (10) in Bewegungsrichtung (74) des Bauteils (7) mit einem zeitlichen Versatz (Δt) zueinander aufeinander folgend anzusteuern, wobei der zeitliche Versatz (Δt) zwischen zwei benachbarten Sensoren (111 - 11n) jeweils korrespondierend zu ihrem räumlichen Sensorabstand (as) voneinander ist.

6. Landwirtschaftliche Arbeitsmaschine (100) nach einem der vorherigen Ansprüche, **dadurch gekennzeichnet, dass** der Sensorabstand (as) jeweils benachbarter Sensoren (111 -11n) des Sensorarrays (10) voneinander gleich ist.

7. Landwirtschaftliche Arbeitsmaschine (100) nach einem der vorherigen Ansprüche, **dadurch gekennzeichnet, dass** die Sensoren (111 -11n) des Sensorarrays (10) baugleich sind.

8. Landwirtschaftliche Arbeitsmaschine (100) nach einem der vorherigen Ansprüche, **dadurch gekennzeichnet, dass** die Steuerungseinheit (14) dazu eingerichtet ist, die Sensoren (111 - 11n) des Sensorarrays (10) zyklisch zweifach oder mehrfach nacheinander anzusteuern.

9. Landwirtschaftliche Arbeitsmaschine (100) nach einem der vorherigen Ansprüche, **dadurch gekennzeichnet, dass** sie mehrere in eine Erstreckungsrichtung (76) des Bauteils (7) nebeneinander angeordnete Sensorarrays (10) umfasst.

10. Landwirtschaftliche Arbeitsmaschine (100) nach einem der vorherigen Ansprüche, **dadurch gekennzeichnet, dass** das Sendesignal (s) ein elektromagnetisches, magnetisches, akustisches, induktives oder optisches Signal ist.

11. Landwirtschaftliche Arbeitsmaschine (100) nach einem der vorherigen Ansprüche, **dadurch gekennzeichnet, dass** jedem Sensor (111 - 11n) des Sensorarrays (10) jeweils ein Sender (17) zugeordnet ist, oder dass jeder Sensor (111 - 11n) des Sensorarrays (10) jeweils einen Sender (17) umfasst.

12. Landwirtschaftliche Arbeitsmaschine (100) nach einem der vorherigen Ansprüche, **dadurch gekennzeichnet, dass** das sich bewegende Bauteil (7) ein Bearbeitungswerkzeug, insbesondere ein Messer, ist, welches an einer Bearbeitungstrommel (70), insbesondere einer Häckseltrommel, angeordnet ist, wobei die Bearbeitungstrommel (70) in eine Drehrichtung (74) um eine Drehachse (73) drehbar ist, wobei die Sensoren (111 - 11n) des Sensorarrays (10) der Messanordnung (1) zur Erfassung der Kontur des Bearbeitungswerkzeugs (7), insbesondere der Kontur (k) der Schneidkante (711) und/oder Schlifffläche (710) des Messers (7), vorgesehen sind.

13. Landwirtschaftliche Arbeitsmaschine (100) nach einem der vorherigen Ansprüche, **dadurch gekennzeichnet, dass** sich das Sensorarray (10) nur entlang eines Teilumfangs (79) der Bearbeitungstrommel (70) erstreckt, wobei die Messanordnung (1) einen Triggersensor (12) aufweist, der den Sensoren (111 - 11n) in Bewegungsrichtung (74) des Bearbeitungswerkzeugs (7) vorgelagert ist, und der dafür vorgesehen ist, ein Eintreffen des Bearbeitungswerkzeugs (7) anzuzeigen.

14. Landwirtschaftliche Arbeitsmaschine (100) nach einem der vorherigen Ansprüche, **dadurch gekennzeichnet, dass** die Steuerungseinheit (14) dazu eingerichtet ist, eine Zeitdifferenz zwischen dem Ansprechen des Triggersensors (12) und einem Eintreffen des Bearbeitungswerkzeugs (7) an dem in Bewegungsrichtung (74) dem Triggersensor (12) nachgeordneten Sensor (111) in Abhängigkeit von einem Triggerabstand (a_{T}) des Triggersensors (12) zu dem nachgeordneten Sensor (111) sowie in Abhängigkeit von der aktuellen Geschwindigkeit des Bearbeitungswerkzeugs (7) zu bestimmen, und die Sensoren (111 - 11n) nach Ablauf der Zeitdifferenz aufeinander folgend anzusteuern.

15. Landwirtschaftliche Arbeitsmaschine (100) nach einem der Ansprüche 12 - 14, **dadurch gekennzeichnet, dass** das Bearbeitungswerkzeug (7) ein Messer ist, und die Auswertungseinheit (15) dazu eingerichtet ist, den Verschleißzustand des Messers (7) zu bestimmen, indem durch Vergleich seiner Kontur (k) mit einem Referenzwert eine Verschiebung der Schneidkante oder eine Verkürzung der Schlifffläche erfasst wird, und/oder indem ein rampenförmiger oder bogenförmiger, insbesondere unscharfer, Verlauf der Schneidkante erfasst wird.

16. Landwirtschaftliche Arbeitsmaschine (100) nach einem der vorherigen Ansprüche, **dadurch gekennzeichnet, dass** die Steuerungseinheit (14) dazu eingerichtet ist, die Kontur (k) des Bearbeitungswerkzeugs (7) und/oder seinen Verschleißzustand an einer Benutzerschnittstelle, insbesondere einer Anzeige (21) in einer Fahrerkabine (2) der landwirtschaftlichen Arbeitsmaschine (100), anzuzeigen.

17. Messanordnung (1) für eine landwirtschaftliche Arbeitsmaschine (100) nach einem der vorherigen Ansprüche, die umfasst:
• mindestens einen Sender (17) zum Aussenden eines Sendesignals (s),
• ein Sensorarray (10) mit mindestens zwei in Bewegungsrichtung (74) des Bauteils (7) hintereinander angeordneten Sensoren (111 - 11n), die jeweils dazu eingerichtet sind, eine Messung durch Empfangen eines von dem Bauteil (7) an einem Messpunkt (131 - 13n) reflektierten Messsignals (m) durchzuführen,
• eine Steuerungseinheit (14), die dazu eingerichtet ist, die Sensoren (111 - 11n) des Sensorarrays (10) in Bewegungsrichtung (74) des Bauteils (7) mit derselben Abtastfrequenz aufeinander folgend anzusteuern, und
• eine Auswertungseinheit (15), die dazu eingerichtet ist, aus den Messsignalen (m) der Sensoren (111 - 11n) jeweils einen Abstandswert (A) des Sensors (111 - 11n) von dem Bauteil (7) zu bestimmen.

18. Verfahren zum Erfassen einer Kontur (k) eines sich in eine Bewegungsrichtung (74) bewegenden Bauteils (7), insbesondere zum Messen eines Schärfegrades und/oder eines Verschleißzustandes eines Bearbeitungswerkzeugs (7), einer landwirtschaftlichen Arbeitsmaschine, insbesondere nach einem der Ansprüche 1 - 13, bei dem zwei oder mehr in Bewegungsrichtung (74) des Bauteils (7) hintereinander angeordnete Sensoren (111 - 11n) eines Sensorarrays (10) einer Messanordnung (1) in Bewegungsrichtung (74) des Bauteils (7) aufeinander folgend eine Messung durchführen, bei dem aus den von den Sensoren (111 - 11n) empfangenen Messsignalen (m) jeweils ein Abstandswert (A) der Sensoren (111 - 11n) von dem Bauteil (7) ermittelt wird, und bei dem ein Kontursignal (k) der Kontur des sich bewegenden Bauteils (7) mit einer gegenüber einer Abtastfrequenz der Sensoren (111 - 11n) höheren Frequenz durch Aneinanderreihen der in Bewegungsrichtung (74) des Bauteils (7) aufeinander folgenden Abstandswerte (A) berechnet wird.

## Claims

1. Agricultural working machine (100), in particular a forage harvester, comprising a working unit, in particular a chopping unit (700) which is provided for processing crops and has a measuring assembly (1) and a component (7) that moves in a movement direction (74) during operation of the working machine (100), the measuring assembly (1) having:
• at least one transmitter (17) for transmitting a transmission signal (s),
• a sensor array (10) having at least two sensors (111 - 11n) arranged one behind the other in the movement direction (74) of the component (7), each of which is designed to carry out a measurement by receiving a measurement signal (m) reflected by the component (7) at a measuring point (131 - 13n),
• a control unit (14) which is designed to control the sensors (111 - 11n) of the sensor array (10) in succession in the movement direction (74) of the component (7) at the same sampling frequency, and
• an evaluation unit (15) which is designed to determine a distance value (A) between the sensor (111 - 11n) and the component (7) from each of the measurement signals (m) of the sensors (111 - 11n).

2. Agricultural working machine (100) according to claim 1, **characterised in that** the evaluation unit (15) is designed to calculate a contour signal (k) of the contour of the moving component (7) at a higher frequency than the sampling frequency of the sensors (111 - 11n) by stringing together the measurement signals (m) of the sensors (111 - 11n).

3. Agricultural working machine (100) according to any of the preceding claims, **characterised in that** the evaluation unit (15) is designed to arrange mutually adjacent distance values (A) at a distance (d_{A}) from one another that is determined by the sensor distance (as) between the sensors (111 - 11n), by a frequency of the transmission signal (s) and by a current speed of the component (7).

4. Agricultural work machine (100) according to any of the preceding claims, **characterised in that** the evaluation unit (15) is designed to determine a wear state of the moving component (7) by comparing its contour (k) with reference values.

5. Agricultural work machine (100) according to any of the preceding claims, **characterised in that** the control unit (14) is designed to control the sensors (111 - 11n) of the sensor array (10) in succession in the movement direction (74) of the component (7) with a temporal offset (Δt) from one another, each temporal offset (Δt) between two adjacent sensors (111 - 11n) corresponding to the spatial sensor distance (as) thereof from one another.

6. Agricultural working machine (100) according to any of the preceding claims, **characterised in that** the sensor distance (as) between each of the adjacent sensors (111 - 11n) of the sensor array (10) is the same.

7. Agricultural working machine (100) according to any of the preceding claims, **characterised in that** the sensors (111 - 11n) of the sensor array (10) are identical in design.

8. Agricultural working machine (100) according to any of the preceding claims, **characterised in that** the control unit (14) is designed to control the sensors (111 - 11n) of the sensor array (10) cyclically twice or several times in succession.

9. Agricultural working machine (100) according to any of the preceding claims, **characterised in that** it comprises a plurality of sensor arrays (10) arranged next to one another in an extension direction (76) of the component (7).

10. Agricultural working machine (100) according to any of the preceding claims, **characterised in that** the transmission signal (s) is an electromagnetic, magnetic, acoustic, inductive or optical signal.

11. Agricultural working machine (100) according to any of the preceding claims, **characterised in that** a transmitter (17) is assigned to each sensor (111 - 11n) of the sensor array (10), or that each sensor (111 - 11n) of the sensor array (10) comprises a transmitter (17).

12. Agricultural working machine (100) according to any of the preceding claims, **characterised in that** the moving component (7) is a processing tool, in particular a blade, which is arranged on a processing drum (70), in particular a chopping drum, the processing drum (70) being rotatable in a rotation direction (74) about a rotational axis (73), the sensors (111 - 11n) of the sensor array (10) of the measuring assembly (1) being provided for detecting the contour of the processing tool (7), in particular the contour (k) of the cutting edge (711) and/or grinding surface (710) of the blade (7).

13. Agricultural working machine (100) according to any of the preceding claims, **characterised in that** the sensor array (10) extends only around a partial circumference (79) of the processing drum (70), the measuring assembly (1) having a trigger sensor (12) which is arranged upstream of the sensors (111 - 11n) in the movement direction (74) of the processing tool (7) and which is provided to indicate the arrival of the machining tool (7).

14. Agricultural working machine (100) according to any of the preceding claims, **characterised in that** the control unit (14) is designed to determine a time difference between the response of the trigger sensor (12) and the arrival of the processing tool (7) at the sensor (111) downstream of the trigger sensor (12) in the movement direction (74) on the basis of a trigger distance (a_{T}) between the trigger sensor (12) and the downstream sensor (111) and on the basis of the current speed of the processing tool (7), and to control the sensors (111 - 11n) in succession after the time difference has elapsed.

15. Agricultural working machine (100) according to any of claims 12 to 14, **characterised in that** the processing tool (7) is a blade, and the evaluation unit (15) is designed to determine the wear state of the blade (7) by detecting a displacement of the cutting edge or a shortening of the ground surface by comparing its contour (k) with a reference value, and/or by detecting a ramp-shaped or curved, in particular blunt, course of the cutting edge.

16. Agricultural working machine (100) according to any of the preceding claims, **characterised in that** the control unit (14) is designed to display the contour (k) of the processing tool (7) and/or its wear state on a user interface, in particular on a display (21) in a driver's cab (2) of the agricultural work machine (100).

17. Measuring assembly (1) for an agricultural working machine (100) according to any of the preceding claims, which assembly comprises:
• at least one transmitter (17) for transmitting a transmission signal (s),
• a sensor array (10) having at least two sensors (111 - 11n) arranged one behind the other in the movement direction (74) of the component (7), each of which is designed to carry out a measurement by receiving a measurement signal (m) reflected by the component (7) at a measuring point (131 - 13n),
• a control unit (14) which is designed to control the sensors (111 - 11n) of the sensor array (10) in succession in the movement direction (74) of the component (7) at the same sampling frequency, and
• an evaluation unit (15) which is designed to determine a distance value (A) between the sensor (111 - 11n) and the component (7) from each of the measurement signals (m) of the sensors (111 - 11n).

18. Method for detecting a contour (k) of a component (7) that moves in a movement direction (74), in particular for measuring a degree of sharpness and/or a wear state of a processing tool (7), of an agricultural working machine, in particular according to any of claims 1 to 13, in which method two or more sensors (111 - 11n) of a sensor array (10) of a measuring assembly (1) arranged one behind the other in the movement direction (74) of the component (7) carry out a measurement in succession in the movement direction (74) of the component (7), in which method a distance value (A) between the sensors (111 - 11n) and the component (7) is determined from the measurement signals (m) received by the sensors (111 - 11n), and in which method a contour signal (k) of the contour of the moving component (7) is calculated at a higher frequency than a sampling frequency of the sensors (111 - 11n) by stringing together the distance values (A) which are in succession in the movement direction (74) of the component (7).

## Revendications

1. Machine agricole (100) notamment ensileuse comportant un équipement, notamment un équipement de hachage (700) pour travailler du fourrage, comportant un dispositif de mesure (1) et un équipement (7) mobile dans la direction de mouvements (74) pendant le fonctionnement de la machine (100),
le dispositif de mesure (1) comprenant :
* au moins un émetteur (17) pour émettre un signal d'émission (s),
* un réseau de capteurs (10) comportant au moins deux capteur (111-11n) installés l'un derrière l'autre dans la direction de déplacement (74) de l'équipement (7), ces capteurs étant conçus pour effectuer une mesure par la réception d'un signal de mesure (m) réfléchi par l'équipement (7) en un point de mesure (131-13n),
* une unité de commande (14) conçue pour commander successivement les capteurs (111-11n) du réseau de capteurs (10) dans la direction de déplacement (74) de l'équipement (7) avec la même fréquence de détection, et
* une unité d'exploitation (15) conçue pour déterminer respectivement la distance (A) du capteur (111-11n) par rapport à l'équipement (7) à partir des signaux de mesure (m) des capteurs (111-11n).

2. Machine agricole (100) selon la revendication 1,
**caractérisée en ce que**
l'unité d'exploitation (15) est conçue pour calculer un signal de contour (k) du contour du équipement (7) en mouvement, avec une fréquence plus élevée que la fréquence de détection des capteurs (111-lln), en rangeant les uns à côté des autres les signaux de mesure (m) des capteurs (111-11n).

3. Machine agricole (100) selon l'une des revendications précédentes, **caractérisée en ce que**
l'unité d'exploitation (15) est conçue pour disposer les distances (A) voisines les unes des autres à une distance (d_{A}) déterminée par l'écartement (aₛ) des capteurs (111-11n) les uns des autres, la fréquence du signal d'émission (s) ainsi que la vitesse actuelle de l'équipement (7).

4. Machine agricole (100) selon l'une des revendications précédentes, **caractérisée en ce que**
l'unité d'exploitation (15) est conçue pour déterminer l'état d'usure de l'équipement (7) en mouvement par la comparaison de son contour (k) à des valeurs de référence.

5. Machine agricole (100) selon l'une des revendications précédentes, **caractérisée en ce que**
l'unité de commande (14) est conçue pour commander successivement les capteurs (111-11n) du réseau de capteurs (10) dans la direction de déplacement (74) de l'équipement (7) avec un décalage dans le temps (Δt) les uns par rapport aux autres,
le décalage dans le temps (Δt) entre deux capteurs voisins (111-lln) correspondant respectivement à leur écart (aₛ) dans l'espace.

6. Machine agricole (100) selon l'une des revendications précédentes, **caractérisée en ce que**
l'écart (aₛ) de capteurs (111-11n) respectivement voisins du réseau de capteurs (10) est identique.

7. Machine agricole (100) selon l'une des revendications précédentes, **caractérisée en ce que**
les capteurs (111-11n) du réseau de capteurs (10) sont identiques.

8. Machine agricole (100) selon l'une des revendications précédentes, **caractérisée en ce que**
l'unité de commande (14) est conçue pour commander les capteurs (111-11n) du réseau de capteurs (10) de manière cyclique successivement, deux fois ou plusieurs fois.

9. Machine agricole (100) selon l'une des revendications précédentes, **caractérisée en ce que**
elle comprend plusieurs réseaux de capteurs (10) installés les uns à côté des autres dans la direction d'extension (76) de l'équipement (7).

10. Machine agricole (100) selon l'une des revendications précédentes, **caractérisée en ce que**
le signal d'émission (s) est un signal électromagnétique, magnétique, acoustique, inductif ou optique.

11. Machine agricole (100) selon l'une des revendications précédentes, **caractérisée en ce que**
un émetteur (17) respectif est associé à chaque capteur (111-11n) du réseau de capteurs (10) ou encore chaque capteur (111-11n) du réseau de capteurs (10) comporte un émetteur (17).

12. Machine agricole (100) selon l'une des revendications précédentes, **caractérisée en ce que**
l'équipement (7) mobile est un outil notamment un couteau prévu sur un tambour (70), notamment un tambour hacheur (70) tournant dans un sens de rotation (74) autour d'un axe de rotation (73), les capteurs (111-11n) du réseau de capteurs (10) du dispositif de mesure (1) étant prévus pour saisir le contour de l'équipement (7), notamment le contour (k) de l'arête de coupe (711) et/ou de la surface d'affûtage (710) du couteau (7).

13. Machine agricole (100) selon l'une des revendications précédentes, **caractérisée en ce que**
le réseau de capteurs (10) occupe seulement une partie de la périphérie (79) du tambour (70), et
le dispositif de mesure (1) comporte un capteur de déclenchement (12) qui est en amont des capteurs (111-11n) dans la direction de déplacement (74) de l'équipement (7) et qui est prévu pour indiquer l'arrivée de l'équipement (7).

14. Machine agricole (100) selon l'une des revendications précédentes, **caractérisée en ce que**
l'unité de commande (14) est prévue pour déterminer la différence de temps entre la sollicitation du capteur de déclenchement (12) et l'arrivée de l'équipement (7) sur le capteur (111) après le capteur de déclenchement (12) dans la direction de déplacement (74), en fonction de l'écart de déclenchement (a_{T}) du capteur de déclenchement (12) par rapport au capteur suivant (111) ainsi qu'en fonction de la vitesse actuelle de l'équipement (7) et commander les uns par rapport aux autres les capteurs (111-11n) à la fin de la différence de temps.

15. Machine agricole (100) selon l'une des revendications 12 à 14, **caractérisée en ce que**
l'équipement (7) est un couteau et l'unité d'exploitation (15) est conçue pour déterminer l'état d'usure du couteau (7) en saisissant le décalage de l'arête de coupe ou un raccourcissement de la surface d'affûtage par la comparaison de son contour (k) avec une valeur de référence et/ou en saisissant le tracé en forme de rampe ou d'arc émoussé de l'arête de coupe.

16. Machine agricole (100) selon l'une des revendications précédentes, **caractérisée en ce que**
l'unité de commande (14) est conçue pour afficher le contour (k) de l'équipement (7) et/ou de son état d'usure sur une interface d'utilisateur, notamment un affichage (21) dans la cabine de conduite (2) de la machine agricole (100).

17. Dispositif de mesure (1) pour une machine agricole (100) selon l'une des revendications précédentes,
comprenant :
* au moins un émetteur (17) pour émettre un signal d'émission (s),
* un réseau de capteurs (10) ayant au moins deux capteurs (111-11n) installés l'un derrière l'autre dans la direction de déplacement (74) de l'équipement (7), ces capteurs étant conçus pour effectuer une mesure par la réception d'un signal de mesure (m) réfléchi par le composant (7) à un point de mesure (131-13n),
* une unité de commande (14) conçue pour commander successivement les uns après les autres, les capteurs (111-11n) du réseau de capteurs (10) dans la direction de mouvement (74) du composant (7), avec la même fréquence de détection, et
* une unité d'exploitation (15) conçue pour déterminer un écart (A) respectif du capteur (111-11n) par rapport à l'équipement (7) à partir des signaux de mesure (m) des capteurs (111-1ln).

18. Procédé de saisie du contour (k) d'un équipement (7) en mouvement dans une direction de mouvement (74), notamment pour mesurer le degré d'affutage et/ou l'état d'usure de l'équipement (7) d'une machine agricole, notamment selon l'une des revendications 1 à 13, procédé selon lequel deux ou plusieurs capteurs (111-lln) d'un réseau de capteurs (10), installés l'un après l'autre dans la direction de déplacement (74) de l'équipement (7) et faisant partie d'un dispositif de mesure (1), effectuent une mesure successivement dans la direction de mouvement (74) de l'équipement (7), selon lequel à partir des signaux de mesure (m) reçus des capteurs (111-11n), on détermine respectivement un écart (A) des capteurs (111-lln) par rapport à l'équipement (7) et selon lequel on calcule un signal de contour (k) du contour de l'équipement (7) mobile avec une fréquence supérieure à la fréquence de détection des capteurs (111-lln), en rangeant les uns à côté des autres, les écarts (A) qui se suivent dans la direction de déplacement (74) de l'équipement (7).
